# EUROPÄISCHE PATENTSCHRIFT

(11) **EP 1 978 003 B1**
(45) Veröffentlichungstag und Bekanntmachung des Hinweises auf die Patenterteilung: **17.12.2014**
(21) Anmeldenummer: 08154088.2
(22) Anmeldetag: 04.04.2008
(51) Int. Cl.: C03C 17/00, C03C 17/32, C08J 3/03, C09D 133/02, C09D 135/00, C09D 139/06, B65D 23/08

(54) **Kaltendvergütung**
Cold end coating
Traitement final à froid

(30) Priorität: 04.04.2007 DE 102007016505
(43) Veröffentlichungstag der Anmeldung: 08.10.2008
(73) Patentinhaber: Heinz-Glas GmbH & Co. KGaA, 98739 Piesau (DE)
(72) Erfinder: Rebhan, Helmut, 96317 Kronach (DE)
(74) Vertreter: Graf Glück Kritzenberger

(56) Entgegenhaltungen:
- WO-A1-2006/055176
- JP-A- 56 155 044
- US-A- 4 065 590
- US-A- 4 927 667
- DATABASE WPI Thomson Scientific, London, GB; AN 1981-94402d XP002569557 & SU 812 779 A1 (LENINGRAD LENSOVET TECH) 15. März 1981 (1981-03-15)

## Beschreibung

Die vorliegende Erfindung betrifft ein Lackierverfahren für Gläser mit einem Verfahrenschritt der Kaltendvergütung des Glases.

Im Stand der Technik ist es anhand der WO 2006/055176 A1 beispielsweise bekannt, Papier mit einer wässrigen Lösung aus Ethylen-Acrylsäure eines Copolymerisates zu behandeln, um einen nachfolgenden elektrographischen oder digitalen offset-Druck zu verbessern.

Es ist bekannt, beim Kaltendvergüten von Gläsern organische Schichten bei Temperaturen unter 150°C aufzubringen. Diese organischen Schichten werden in der Regel aufgespritzt. Die dazu verwendeten Beschichtungsmittel bestehen aus wässrigen Lösungen mit etwa 0,1 - 0,5 Stearat unter Netzmittelzusatz oder aus Emulsionen aus Wasser und Wachsen, Ölsäuren und besonders auch Polyethylen oder seinen Derivaten wie Polyoxyethylenglykol oder -stearat. Die genannten Schichten bewirken eine hohe Gleitfahigkeit, gestalten jedoch eine nachfolgende Veredelung, besonders Spritzlackieren mit organischen lösemittelarmen Lacken als außerordentlich schwierig.

Aus der JP 5615504 A ist es bekannt, eine Flasche mit einem Carboxyl- und Epoxy-Gruppen enthaltenden Olefin Copolymer zu beschichten, um dessen Widerstandsfähigkeit und Alkali-Resistenz zu erhöhen.

Es ist daher Aufgabe der Erfindung, eine Kaltendvergütung zu schaffen, bei welcher das nachträgliche Aufbringen einer Lackschicht ohne aufwändige Vorarbeiten ermöglicht wird.

Diese Aufgabe wird erfindungsgemäß durch das Verfahren gemäß Anspruch 1 gelöst. Vorteilhafte Weiterbildungen der Erfindung sind Gegenstand der Unteransprüche.

Ein Kaltendvergütungsmittel gemäß der vorliegenden Erfindung beinhaltet 85 bis 99 Gew.-% demineralisiertes Wasser und 15 bis 1 Gew.-% wenigstens eines Polycarboxylats.

Bei Polycarboxylaten handelt es sich um wasserlösliche, lineare Polymere mit zahlreichen Carboxy-Gruppen. In Waschmitteln werden als Polycarboxylate Homopolymerisate der Acrylsäure sowie Copolymerisate der Acryl- und Maleinsäure eingesetzt. Kombinationen aus Zeolithen und Polycarboxylaten besitzen in Phosphatfreien Waschmitteln ein gutes Primärwaschvermögen und vermindern in Folge ihrer dispergierenden Eigenschaften gleichzeitig Ablagerungen und die damit verbundene Vergrauung der Gewebe. In Kläranlagen werden Polycarboxylate an Belebtschlamm adsorbiert bzw. teilweise biologisch abgebaut und vollständig aus dem Abwasser eliminiert.

Überraschenderweise hat sich nun herausgestellt, dass Dispersionen aus Polycarboxylaten eine hervorragende Reifung des Glases bewirken und daher auch eine sehr gute Gleitfähigkeit, andererseits jedoch eine Lackierung der kaltendvergüteten Oberfläche ohne vorherige Zwischenbehandlung mit Lacken auf Wasserbasis oder wassermischbaren Lacken auf organischer Basis erlauben. Dies war mit den bisher bekannten Kaltendvergütungsmitteln nur eingeschränkt möglich, da Benetzungsstörungen qualitativ hochwertige Lackierungen verhinderten. Das erfindungsgemäß verwendete Kaltendvergütungsmittel erlaubt dagegen eine anschließende Lackierung mit wassermischbaren lösemittelarmen Lacken ohne die bekannten Ausfälle oder Beeinträchtigungen durch Benetzungsstörungen.

Vorzugsweise beträgt der Anteil an Polycarboxylat 8 - 2 Gew.-%. Besonders bevorzugt werden die von der Firma BASF unter der Marke Sokalan vertriebenen Polycarboxylate eingesetzt. Kaltendvergütungsmittel mit zumindest einer Variante von Sokalan^{™} bewirken besonders gute Eigenschaften der kaltendvergüteten Glasoberfläche.

In einem Ausführungsbeispiel hat ein Kaltendvergütungsmittel bestehend aus 97,5 Gew.-% demineralisiertem Wasser und 2,5 Gew.-% Polycarboxylaten zu einer hervorragenden Lackierfähigkeit und Gleitfähigkeit geführt. Das Kaltendvergütungsmittel wurde in dem Ausführungsbeispiel auf die noch warme Glasoberfläche aufgesprüht. Die sich herausbildende Oberfläche des Glases weist aufgrund des Kaltendvergütungsmittels polare Strukturen auf und hat sich als hervorragende Basis für eine Weiterveredelung des Glases insbesondere zur Sprühlackierung herausgestellt. Es ist daher nach dem Kaltendvergüten und vor dem Lackieren keine Vorbehandlung wie z.B. Beflammen oder dergleichen notwendig.

Das Verfahren der vorliegenden Erfindung umfasst damit ein Verfahren zum Kaltendvergüten von Gläsern, bei welchem ein zumindest weitgehend abgekühltes Glas einer Kaltendvergütung durch Aufbringen einer Beschichtung unterzogen wird. Das Kaltendvergütungsmittel wird bevorzugt bei Temperaturen unter 150°C, vorzugsweise bei Temperaturen unter 80°C auf die Glasoberfläche aufgebracht.

Die nachfolgende Lackierung erfolgt vorzugsweise durch Sprühen. Es sind jedoch auch andere Beschichtungsverfahren wie Siebdruck, Tampondruck und Heißfolienprägung möglich. Dabei werden Lacke auf Wasserbasis oder auch wassermischbare, z.B. farbige Lacke vorzugsweise auf organischer Basis zum Spritzlackieren der Produkte eingesetzt. Diese Beschichtungsverfahren benötigen Oberflächen, deren Hafteigenschaften nicht beeinträchtigt sind. Die Anwendung der Kaltendvergütung ermöglicht den Einsatz solcher Beschichtungsverfahren mit wassermischbaren Lacken auf organischer Basis oder Lacken auf Wasserbasis.

Zu der Wirkungsweise des Kaltvergütungsmittels ist zu sagen, das die Behandlung des Glases, vorzugsweise Behälterglases insbesondere für die Kosmetikindustrie zu einer Blitzhalterung bzw. Blitzreifung des Glases führt, bei welcher die mikroskopisch kleinen Vertiefungen gefüllt werden und dadurch das Glas eine hohe mechanische Resistenz erhält. Zusätzlich bilden sich an der Oberfläche polare Strukturen aus, die das Anhaften der wasserlöslichen Lacke oder Lacke auf Wasserbasis ermöglichen. Es ist daher nach dem Kaltendvergüten und vor dem Lackieren keine Vorbehandlung wie, z.B. Sandstrahlen oder dergleichen notwendig.

## Patentansprüche

1. Verfahren zum Lackieren von Gläsern, bei welchem
a) auf das zumindest weitgehend abgekühlte Glas eine Kaltendvergütung durch Aufbringen einer Beschichtungsmischung aus 85 bis 99 Gew-% demineralisiertem Wasser und 15 bis 1 Gew.-% wenigstens eines Polycarboxylats aufgebracht wird, und
b) nachfolgend auf die kaltendvergütete und ansonsten unbehandelte Oberfläche des Glases eine Beschichtung mit einem Lack auf Wässerbasis oder eines wassermischbaren Lacks aufgebracht wird.

2. Verfahren nach Anspruch 1, wobei das Kaltendvergütungsmittel 92 bis 98 Gew.-% demineralisiertes Wasser und 8 bis 2 Gew.-% wenigstens eines Polycarboxylats hat.

3. Verfahren nach Anspruch 1 oder 2, wobei es sich bei wenigstens einem Polycarboxylat um Polyacrylsäure handelt.

4. Verfahren nach wenigstens einem der Ansprüche 1 bis 3, wobei es sich bei wenigstens einem Polycarboxylat um ein Maleinsäure/Acrylsäure-Copolymerisat handelt.

5. Verfahren nach wenigstens einem der Ansprüche 1 bis 4, wobei es sich bei wenigstens einem Polycarboxylat um ein Vinylpyrrolidon/Vinylimidazol-Copolymerisat handelt.

## Claims

1. Method for coating glasses, in which
a) a cold end coating is applied to the at least substantially cooled glass by application of a coating mixture of 85 to 99 wt.% of demineralized water and 15 to 1 wt.% of at least one polycarboxylate, and
b) a coating comprising a water-based lacquer or a water-miscible lacquer is subsequently applied to the cold end-coated and otherwise untreated surface of the glass.

2. Method according to claim 1, wherein the cold end coating means comprise 92 to 98 wt.% of demineralized water and 8 to 2 wt.% of at least one polycarboxylate.

3. Method according to claim 1 or 2, wherein at least one polycarboxylate is polyacrylic acid.

4. Method according to at least one of claims 1 to 3, wherein at least one polycarboxylate is a maleic acid/acrylic acid copolymer.

5. Method according to at least one of claims 1 to 4, wherein at least one polycarboxylate is a vinylpyrrolidone/vinylimidazole copolymer.

## Revendications

1. Procédé de peinture de verres, dans lequel
a) sur le verre au moins refroidi dans une large mesure, un traitement à froid est appliqué par l'application d'un mélange d'enrobage constitué de 85 à 99 % en poids d'eau déminéralisée et de 15 à 1 % en poids d'au moins un polycarboxylate, et
b) un enrobage avec une peinture à base aqueuse ou d'une peinture soluble dans l'eau est ensuite appliqué sur la surface du verre traitée à froid et non traitée par ailleurs.

2. Procédé selon la revendication 1, le produit de traitement à froid a 92 à 98 % en poids d'eau déminéralisée et 8 à 2 % en poids d'au moins un polycarboxylate.

3. Procédé selon la revendication 1 ou 2, au moins un polycarboxylate étant un acide polyacrylique.

4. Procédé selon au moins l'une des revendications 1 à 3, au moins un polycarboxylate étant un copolymérisat d'acide maléique/acide acrylique.

5. Procédé selon au moins l'une des revendications 1 à 4, au moins un polycarboxylate étant un copolymérisat de vinylpyrrolidone/vinylimidazol.
